# EUROPÄISCHE PATENTSCHRIFT

(11) **EP 3 323 592 B1**
(45) Veröffentlichungstag und Bekanntmachung des Hinweises auf die Patenterteilung: **12.08.2020**
(21) Anmeldenummer: 17001880.8
(22) Anmeldetag: 16.11.2017
(51) Int. Cl.: B29C 53/60

(54) **VERFAHREN ZUR HERSTELLUNG EINES TANKS ZUR AUFNAHME, LAGERUNG UND DEN TRANSPORT VON INSBESONDERE FRISCHWASSER, DER TANK SELBST UND DESSEN VERWENDUNG IN INSBESONDERE FLUGZEUGEN**
METHOD OF PRODUCING A TANK FOR RECEIVING, STORAGE AND TRANSPORT OF IN PARTICULAR FRESH WATER, THE TANK ITSELF AND ITS USE, IN PARTICULAR IN AEROPLANES
PROCÉDÉ DE FABRICATION D'UN RÉSERVOIR PERMETTANT LA RÉCEPTION, LE STOCKAGE ET LE TRANSPORT, EN PARTICULIER D'EAU DOUCE, RÉSERVOIR ET SON UTILISATION, EN PARTICULIER DANS LES AVIONS

(30) Priorität: 16.11.2016 DE 102016121993; 12.09.2017 EP 17001526
(43) Veröffentlichungstag der Anmeldung: 23.05.2018
(73) Patentinhaber: MT Aerospace AG, 86153 Augsburg (DE)
(72) Erfinder: Steininger, Hans J., 81545 München (DE)
(74) Vertreter: Grape & Schwarzensteiner

(56) Entgegenhaltungen:
- EP-A1- 0 094 805
- EP-A1- 3 061 592
- US-A- 2 718 583

## Beschreibung

Die vorliegende Erfindung betrifft ein Verfahren zur Herstellung eines Behälters, insbesondere Tanks zum Aufnehmen, Lagern und Transportieren von viskosen oder fluiden Medien, insbesondere Wasser, insbesondere Frisch-, respektive Trinkwasser. Die Erfindung betrifft auch die nach dem Verfahren erzeugten Behälter bzw. Tanks und deren Verwendung bzw. deren Einsatz in der Luft- und Raumfahrt, insbesondere in Flugzeugen.

Ein Verfahren nach dem Stand der Technik ist in der US2718583 offenbart.

Behälter für die Verwendung bzw. den Einsatz zum Aufnehmen, Lagern und Transportieren von viskosen oder fluiden Medien, insbesondere Wasser, insbesondere Frischwasser für die Luft- und Raumfahrt müssen verschiedene, teils sehr stringente Bedingungen erfüllen. Sie müssen stabil sein, das heißt, in sich eine hohe Steifigkeit aufweisen, um beim Flug auftretende Schub- und Scherkräfte kompensieren zu können. Sie müssen eine leichte Bauweise besitzen, um neben der Fülllast selbst eine möglichst geringe Gewichtslast darzustellen. Ein zu hohes Eigengewicht der Behälter, würde nicht nur ein zusätzliches Energiekostenproblem mit sich bringen sondern unter Umständen auch die erforderliche Nutzlast des Fluggerätes reduzieren. Zum Aufnehmen, Lagern und Transportieren von Trinkwasser ist es darüber hinaus erforderlich, dass die Innenoberfläche der Tanks lebensmittel- bzw. trinkwassertauglich ist oder derart ausgerüstet ist. Die Innenoberfläche bzw. das diese Innenoberfläche bildende Material darf über die Zeitdauer der Lagerung keine gesundheitsschädlichen Stoffe an das Wasser abgeben und die Dichtigkeit halten.

Solche Behälter wurden lange Zeit aus Metall oder Stahllegierungen bereitgestellt. Behälter aus diesem Material besitzen ein hohes Eigengewicht, was in der Luft- und Raumfahrt nicht akzeptabel ist. Man versuchte daher auf Kunststoffbehälter auszuweichen, die jedoch bei geeigneter Stabilität immer noch ein Gewichtsproblem mit sich bringen und zusätzlich aufgrund der Materialeigenschaften häufig nicht lebensmittel- bzw. trinkwassertauglich waren. Auch ergaben sich zusätzlich Probleme mit der Dichtigkeit.

Die Aufgabe der vorliegenden Erfindung ist darin zu sehen, alle diese Probleme durch eine geeignete Materialauswahl, verbunden mit einer darauf abgestimmten und an die oben genannten Erfordernisse angepassten Herstellungstechnik und Verfahrensparameter zu beheben.

Gegenstand der vorliegenden Erfindung ist somit ein Verfahren zur Herstellung von Behältern zum Aufnehmen, Lagern und Transportieren von viskosen und fluiden Medien, wobei die Behälter aus einem innen liegenden Liner und einem äußeren Mantel aus faserverstärktem Kunststoff aufgebaut sind. In einem ersten Schritt wird dazu auf einem endformnahen oder endformidentischen Wickelkern der Liner durch Aufwickeln einer Kunststofffolie aufgebaut. Der Liner ist und/oder wird in einem zweiten Schritt einer Oberflächenbehandlung zur Erhöhung des Haftvermögens gegenüber einem weiteren Materialaufbau unterworfen. Der so vorbehandelte Liner wird in einem dritten Schritt mit einem Material aus mit Harz getränkten, vorgetränkten oder nicht getränkten Verstärkungsfasern umwickelt und dieser Aufbau in weiteren Schritten im Wesentlichen einer definiert temperaturgeführten Aushärtung, Trennung, weiteren Bearbeitung und erneuten Fügung zu dem fertigen Tank unterworfen. Dabei wird für den Wickelkern ein Material ausgewählt, das einen im Verhältnis zu den Verstärkungsfasern bzw. dem Faserverbundkernstoff höheren Wärmeausdehnungskoeffizienten α aufweist, so dass während des Aushärtens die zwischen dem Wickelkern und dem faserverstärkten Kunststoff liegende Kunststofffolie verpresst wird.

Schon mit diesen Verfahrensschritten lassen sich in Leichtbauweise Behälter mit hoher Stabilität, Festigkeit und Lebensdauer erzeugen. Durch den gezielten Anpressdruck wird die Haftung zwischen der den Liner bildenden Folie und dem Faserverbundkunststoff gefördert und wesentlich verbessert.

Zu den Materialien, welche im Allgemeinen zur Formung von Wickelkernen verwendet werden, zählen unter anderem verschiedene Stähle, Metalllegierungen, kohlefaser- oder glasfaserverstärkte Kunststoffe, diese gegebenenfalls mit einer metallischen Beschichtung, Hartschäume oder wasserlösliche Kerne.

Im Rahmen der vorliegenden Erfindung wird für den Wickelkern ein Material ausgewählt, das beim Abkühlen von der Aushärtetemperatur auf Raumtemperatur unter Beibehaltung seiner originären Materialeigenschaften schrumpft. Damit kann der Wickelkern leichter aus den Behälterhälften bzw. -teilen entnommen werden und er kann wieder für eine nächste Behälterherstellung verwendet werden.

Dazu kann der Wickelkern prinzipiell aus einem geeigneten Kunststoffmaterial oder einem Metall, respektive einer Metalllegierung hergestellt werden, sofern ein geeignet hoher Ausdehnungskoeffizient und Reversibilität der Materialeigenschaften gesichert ist.

In besonders vorteilhafter Weise wird deshalb eine Aluminiumlegierung zur Ausformung des Wickelkerns gewählt. Dieses Material hat einen sehr hohen Wärmeausdehnungskoeffizienten und kehrt beim Abkühlen von der Aushärtetemperatur unter Schrumpfen zu seinen originären Materialeigenschaften zurück.

Vorzugsweise ist dazu der Wickelkern aus einer Aluminiumlegierung geformt, welche einen sehr hohen Wärmeausdehnungskoeffizienten α (etwa 23,1 x 10⁻⁶ K) besitzt. So ist eine Vielzahl von Materialien für das Einstellen eines hohen Anpressdruckes zwischen Wickelkern und Faserverbundkunststoff auswählbar. Aluminiumlegierungen zählen zu den Materialien, die beim Abkühlen von der Aushärtetemperatur unter Beibehaltung der originären Materialeigenschaften schrumpfen. Solche Wickelkerne sind daher wiederverwendbar.

Die Kunststofffolie wird vorzugsweise aus der Gruppe ausgewählt, die aus hochdichten Polyethylenen (HD-PE), niedrigdichten Polyethylenen (LD-PE), Polyamiden (PA) oder Polypropylenen (PP) ausgewählt. Darunter werden insbesondere jene ausgewählt, die lebensmittel- bzw. trinkwassertauglich sind. Diese Kunststoffe erfüllen aufgrund ihrer Materialeigenschaften alle Anforderungen an Lebensmittel- bzw. Trinkwassertauglichkeit. Als besonders tauglich haben sich für den vorliegenden Einsatz Polypropylene, insbesondere orientierte Polypropylene (OPP) und für weitere Anwendungsfälle Polyethylene (PE) erwiesen.

Obwohl derartige Kunststofffolien die im Rahmen der vorliegenden Erfindung gewünschten Eigenschaften hinsichtlich Dichtigkeit und Verträglichkeit aufweisen, besitzen sie auch einen nicht unerheblichen Nachteil. Sie weisen eine unpolare Oberfläche auf und ihre Weiterverarbeitung durch weiteren Materialaufbau ist so gut wie nicht möglich.

Daher ist gemäß der vorliegenden Erfindung wenigstens eine Oberfläche der ausgewählten Kunststofffolie zu deren Polarisierung oberflächenbehandelt oder wird beim Aufwickeln auf den Wickelkern oberflächenbehandelt. Ziel dieser Behandlung ist die Aktivierung wenigstens der Oberfläche der Folie, welche der faserverstärkten Kunststoffschicht zugewandt sein soll. Es soll durch die Oberflächenbehandlung eine "polare Schicht" ausgebildet werden, welche das Haftungsvermögen zu einem weiteren Materialaufbau wesentlich erhöht.

In geeigneter Weise wird oder wurde dazu ein elektrochemisches Verfahren oder eine Plasma-, respektive Coronabehandlung verwendet. Diese Methoden sind als solche zur Aktivierung der unpolaren Oberflächen von Kunststofffolien bekannt und erprobt. Entsprechende Folien sind im Handel frei erhältlich.

Im Rahmen der vorliegenden Erfindung erfolgt vor dem Aufbringen bzw. der Ausbildung der faserverstärkten Kunststoffschicht das zusätzliche Aufbringen eines chemischen Haftvermittlers (Primers) zur weiteren Modifizierung der Folienoberfläche. Auch diese Modifizierung dient zur weiteren Erhöhung des Haftvermögens zwischen Liner und Faserverbund, da eine Modifizierung der Folienoberfläche durch elektrochemische Verfahren oder Plasma- oder Coronaverfahren nicht ausreichen kann. Gleichzeitig wird das Haftvermögen zwischen Folie und Primer erst möglich gemacht.

Als Primer werden vorzugsweise solche auf Basis von chlorierten Polyolefinen verwendet. Es handelt sich um wässrige Lösungen dieser Substanzen, die durch Sprühen oder Streichen aufgetragen werden können. Als ein handelsübliches Produkt ist SIPIOL® WP 8555, erhältlich von LORD Germany GmbH, zu nennen

Als Verstärkungsfasern können Aramid-, Borid-, Borcarbid-, Carbonfasern oder Mischungen daraus dienen. Vorzugsweise werden jedoch Carbonfasern aufgrund deren Eigenschaften eingesetzt. Diese Eigenschaften sind eine hohe Festigkeit und Steifigkeit bei gleichzeitig geringer Bruchdehnung und des E-Modulwertes, der diese besonders geeignet für den Leichtbau macht. Leichtbau ist wie eingangs erwähnt ein wesentliches Ziel der vorliegenden Erfindung.

Die Verstärkungsfasern werden in üblicher Weise in Form von Bändern oder dergleichen bahnförmigem Material vorliegend verwendet. Das Harz zur Ausbildung der Faserverbundmatrix wird vorzugsweise unter den Epoxidharzen ausgewählt.

Der Aufbau aus behandelter Folie und Faserverbundmaterial (Faser plus Harz) wird im Ofen unter definierter Temperaturführung ausgehärtet, wobei sich die Temperaturführung durch die zum Einsatz kommende lebensmittel- und/oder trinkwasserverträgliche Kunststofffolie bestimmt. Dann wird der Aufbau in Umfangsrichtung getrennt, der Wickelkern entnommen und die Hälften nach dem Schäften der Fügeränder erneut klebend verbunden und nachfolgend unter definierter Temperaturführung getempert. Vor dem erneuten Fügen können weitere Bedienungselemente für einen Tank in die Hälften eingebracht werden.

Gegenstand der vorliegenden Erfindung ist auch ein nach dem erfindungsgemäßen Verfahren hergestellter Behälter, respektive Tank sowie dessen Verwendung, insbesondere als Trinkwasserbehälter für Fluggeräte, insbesondere Flugzeuge.

Nachfolgend wird ein erfindungsgemäßer Herstellungsprozess unter Bezugnahme auf einen Trinkwassertank detaillierter beschrieben.

Zunächst wird ein Wickelkern bereitgestellt, der in Form und Größe, der gewünschten Form und Größe eines herzustellenden Trinkwassertanks entspricht. Form und Größe des Wickelkerns sind demnach beliebig den Erfordernissen anzupassen. Für das beanspruchte Verfahren besteht der Wickelkern aus Aluminium, respektive einer Al-Legierung, da dieses Material einen sehr hohen Wärmeausdehnungskoeffizienten α besitzt (etwa 23,1 x 10⁻⁶ K⁻¹). Diesen hohen Wärmeausdehnungskoeffizienten macht sich die Erfindung in späteren Schritten zu Nutze.

Dem Wickelkern, der über seine Längsachse drehbar gelagert ist, wird nun eine vorzugsweise lebensmittel- und/oder trinkwasserverträgliche Folie aus orientiertem Polypropylen (OPP bzw. PP-O) oder Polyethylen (PE) zugeführt und durch Drehen des Wickelkerns nach und nach in allen Abschnitten bewickelt. Die Folie aus orientiertem Polypropylen (OPP) oder Polyethylen (PE) ist ein Band mit etwa 2 cm Breite und einer Dicke von einigen Mikrometern und wird überlappend sowohl im Bereich der Dome als auch im zylindrischen Bereich des Wickelkerns abgewickelt. Dieses Folienmaterial ist vorzugsweise bereits oberflächenbehandelt, entweder durch ein elektrochemisches Verfahren oder durch ein Corona- bzw. Plasmaverfahren. Diese Oberflächenbehandlung dient der Aktivierung der sonst unpolaren Oberfläche der Folie. Theoretisch ist diese Art der Oberflächenbehandlung auch noch während des Abwickelns der Folie auf den Wickelkern denkbar und könnte dann quasi simultan ausgeführt werden. Auch kann eine biaxial orientierte Folie aus Polypropylen (BOPP), welche gleichermaßen oberflächenbehandelt ist oder wird, zum Einsatz kommen. Wird eine vorbehandelte Folie verwendet, ist selbstverständlich darauf zu achten, dass die oberflächenbehandelte bzw. -modifizierte Seite der Folie nach außen, also vom Wickelkern weg, gerichtet ist.

Sobald der Wickelkern auf seiner Oberfläche vollständig mit der Folie überlappend bedeckt ist, wird der ausgewählte Haftvermittler zur Vorbehandlung für den darauffolgenden Wickelprozess zum Aufbringen der bevorzugten Carbonfasern ganzflächig aufgetragen. Damit soll das Haftvermögen zwischen Folie und Carbonfaserschicht weiter verbessert werden.

Die Carbonfaserschicht, welche in üblicher Weise in Form von Bändern oder Rovings vorliegt, ist mit dem Matrixharz, vorzugsweise einem Epoxidharz, zumindest vorgetränkt. Nach dem vollständigen Abwickeln der Carbonfaserschicht(en) kann oder muss gegebenenfalls nachgetränkt werden.

Der fertige Aufbau wird dann im Ofen bei der definierten Temperaturführung ausgehärtet. Der Ofenzyklus zum Härten ist derart gestaltet, dass zunächst der Faserverbund anhärtet und im weiteren Verlauf bei einer dann im Vergleich höheren Temperatur der Folienliner zwischen dem sich (weiter) ausdehnenden Wickeldorn und dem Faserverbund verpresst wird.

Beim Aushärten bei erhöhter Temperatur dehnt sich ein auf einer Al-Legierung basierender Wickelkern aufgrund seines sehr großen Ausdehnungskoeffizienten α (etwa 23,1 x 10⁻⁶ K⁻¹)aus. Der Ausdehnungskoeffizient der mit Harz imprägnierten Carbonfaserschicht bzw. der Carbonfasern selbst geht dagegen gegen null. Die Linerfolie wird damit zwischen dem Wickelkern und der Fasermatrix verpresst und damit deren Verbundstabilität mit dem ausgehärteten Faserverbund erhöht. Kommen andere Faserverstärkungen, respektive Faserverbundmaterialien zum Einsatz, muss gegebenenfalls das Material für den Wickelkern darauf abgestimmt bzw. angepasst werden.

Der so hergestellte Verbundkörper aus lebensmittel- und/oder trinkwasserverträglicher oberflächenbehandelter OPP- oder PE-Folie und Carbonfaserkunststoff wird dann in seiner Umfangsrichtung, versetzt zur Mitte, getrennt bzw. auseinander geschnitten und der Wickelkern entfernt. Dieser Schritt ist aufgrund des Schrumpfs des Wickelkerns relativ zum ausgehärteten Faserverbund erleichtert.

Die Tankhälften werden dann an den Schnittkanten geschäftet, Bohrungen und Flansche in üblicher Weise für die Zufuhr und/oder Entnahme von Trinkwasser vorgesehen. Dann werden die Tankhälften über die geschäfteten Schnittkanten verklebt. Dazu wählt man vorzugsweise einen lösemittelfreien Beschichtungsstoff auf Epoxidharzbasis aus. Ein solcher Beschichtungsstoff ist beispielsweise, aber nicht ausschließlich ein SikaCor®-Kleber. SikaCor® ist für Lebensmittel, respektive Trinkwasser zugelassen. Schließlich wird der Tank gegebenenfalls, aber nicht notwendigerweise nochmals bei etwa 80°C unter definierter Temperaturführung getempert.

Durch die erfindungsgemäß getroffene Materialauswahl für Wickelkern, Folienliner und Faserverbundbasis und die für den Aushärtungs- und Temperprozess speziell entwickelte und definierte Temperaturführung wird eine hohe Stabilität des erzeugten Tankgehäuses mit einer hohen Lebensdauer von bis zu 30 Jahren erreicht.

Eine im Rahmen der vorliegenden Erfindung zur Anwendung kommende Temperaturführung beim Aushärten und Tempern ist in der sich hier anschließenden Tabelle für die Folien aus orientiertem Polypropylen (OPP) und Polyethylen (PE) lediglich beispielhaft und ohne jede Beschränkung darauf angegeben. Auch ist jeweils der Haftvermittler (Primer) auf Wasserbasis angegeben.

| **Folie** | **Primer** | **Ofenzyklus Härten** | **Ofenzyklus Tempern** |
|---|---|---|---|
| OPP | Sipiol® | 0,5h aufheizen von RT 3h bis 5,5h bei 120°C 0,25h aufheizen 5h bei 142°C >2h abkühlen auf RT | 5h aufheizen von RT auf 80°C 6h bei 80°C >1h abkühlen auf RT |
| PE | Sipiol® | 0,33h aufheizen von RT 2h bei 60°C 0,5h aufheizen 2h bei 90°C 0,5h aufheizen 4h bei 120°C >2h abkühlen auf RT | 5h aufheizen von RT auf 80°C 6h bei 80°C >1h abkühlen auf RT |

Das erfindungsgemäße Verfahren kommt insbesondere bei der Herstellung für Wassertanks zur Verwendung in Flugzeugen zur Anwendung.

## Patentansprüche

1. Verfahren zur Herstellung eines Behälters zur Aufnahme, Lagerung und den Transport von viskosen oder fluiden Medien, aufgebaut aus einem innen liegenden Liner und einem äußeren Mantel aus faserverstärktem Kunststoff, indem auf einem endformnahen oder endformidentischen Wickelkern in einem ersten Schritt der Liner durch Aufwickeln einer Kunststofffolie aufgebaut wird, der Liner in einem zweiten Schritt einer Oberflächenbehandlung zur Erhöhung des Haftvermögens gegenüber einem weiteren Materialaufbau unterworfen wird, der so vorbehandelte Liner in einem dritten Schritt mit einem Material aus mit Harz getränkten, vorgetränkten oder nicht getränkten Verstärkungsfasern umwickelt wird und dieser Aufbau in weiteren Schritten einer Aushärtung unter definierter Temperaturführung, Trennung und erneuten Fügung zu dem Tankgehäuse unterworfen wird, wobei für den Wickelkern ein Material ausgewählt wird, das einen im Verhältnis zu den Verstärkungsfasern bzw. dem Faserverbundkunststoff höheren Wärmeausdehnungskoeffizienten α aufweist, so dass während des Aushärtens die zwischen dem Wickelkern und dem faserverstärkten Kunststoff liegende Kunststofffolie verpresst wird, und das beim Abkühlen unter Beibehaltung seiner originären Materialeigenschaften schrumpft und wobei die Oberflächenbehandlung darin besteht, dass wenigstens eine Oberfläche der Kunststofffolie zu deren Polarisierung oberflächenbehandelt ist oder während und/oder nach dem Aufwickeln auf den Wickelkern derart oberflächenbehandelt wird.

2. Verfahren nach Anspruch 1, **dadurch gekennzeichnet, dass** der Wickelkern aus einem geeigneten Kunststoff oder einem Metall bzw. einer Metalllegierung bereitgestellt wird.

3. Verfahren nach Anspruch 2, **dadurch gekennzeichnet, dass** der Wickelkern aus Aluminium bzw. eine Al-Legierung geformt ist/wird.

4. Verfahren nach einem jeden der Ansprüche 1 bis 3, **dadurch gekennzeichnet, dass** die Kunststofffolie aus der Gruppe ausgewählt ist, bestehend aus HD-PE (hochdichte Polyethylene), LD-PE (niedrigdichte Polyethylene), PA (Polyamide) oder PP (Polypropylene).

5. Verfahren nach Anspruch 4, **dadurch gekennzeichnet, dass** die Kunststofffolie lebensmittel- und/oder trinkwassertauglich ist.

6. Verfahren nach Anspruch 4 oder 5, **dadurch gekennzeichnet, dass** eine Folie aus OPP (orientiertes Polypropylen) ausgewählt wird.

7. Verfahren nach Anspruch 4 oder 5, **dadurch gekennzeichnet, dass** eine Folie aus PE (Polyethylen) ausgewählt wird.

8. Verfahren nach einem jeden der Ansprüche 1 bis 7, **dadurch gekennzeichnet, dass** zur Oberflächenbehandlung ein elektrotechnisches Verfahren verwendet wurde/wird.

9. Verfahren nach einem jeden der Ansprüche 1 bis 7, **dadurch gekennzeichnet, dass** zur Oberflächenbehandlung eine Plasma- oder Coronabehandlung durchgeführt wurde/wird.

10. Verfahren nach einem jeden der vorhergehenden Ansprüche, **dadurch gekennzeichnet, dass** wahlweise eine zusätzliche Oberflächenbehandlung durch Auftragen eines Haftvermittlers erfolgt.

11. Verfahren nach Anspruch 10, **dadurch gekennzeichnet, dass** als Haftvermittler ein solcher auf Basis von chlorierten Polyolefinen ausgewählt wird.

12. Verfahren nach einem jeden der vorhergehenden Ansprüche, **dadurch gekennzeichnet, dass** als Verstärkungsfasern Aramid-, Borid-, Borcarbid-, Carbonfasern oder Mischungen daraus, vorzugsweise Carbonfasern ausgewählt werden.

13. Verfahren nach Anspruch 12, **dadurch gekennzeichnet, dass** die Verstärkungsfasern in Form von Bändern oder dergleichen bahnförmigem Material vorliegend verwendet werden.

14. Verfahren nach einem jeden der vorhergehenden Ansprüche, **dadurch gekennzeichnet, dass** das Harz zur Ausbildung der Faserverbundmatrix unter den Epoxidharzen ausgewählt wird.

15. Verfahren nach einem der vorhergehenden Ansprüche, **dadurch gekennzeichnet, dass** der nach den Ansprüchen 1 bis 14 erzeugte Materialaufbau im Ofen ausgehärtet, dann in Umfangsrichtung getrennt, der Wickelkern entnommen und die Hälften nach dem Schäften der Fügeränder erneut klebend verbunden werden.

## Claims

1. Method for producing a container for receiving, storing and transporting viscous or fluid media, constructed from an inner liner and an outer casing of fibre-reinforced plastic, whereby the liner is built upon a winding core near to or identical to the end shape in a first step by winding a plastic film, the liner is subjected to a surface treatment in a second step to increase the adhesion for further material build-up, the liner pretreated in that way is wrapped in a third step with a material made of resin-impregnated, pre-impregnated or non-impregnated reinforcement fibres and this structure is subjected in further steps to curing under defined temperature control, separation and rejoining to the tank casing, wherein, for the winding core, a material is selected that has a thermal expansion coefficient α which is higher in relation to the reinforcement fibres or the fibre composite plastic, respectively, so that during the curing process the plastic film lying between the winding core and the fibre-reinforced plastic is injected, and which shrinks upon cooling while retaining its original material properties and wherein the surface treatment consists of at least one surface of the plastic film being surface-treated to polarise it or being surface-treated in this way during and/or after winding onto the winding core.

2. Method according to claim 1, **characterised in that** the winding core is provided from a suitable plastic or metal or metal alloy, respectively.

3. Method according to claim 2, **characterised in that** the winding core is formed from aluminium or an aluminium alloy, respectively.

4. Method according to anyone of the claims 1 to 3, **characterised in that** the plastic film is selected from the group consisting of HDPE (high-density polyethylenes), LDPE (low-density polyethylenes), PA (polyamides) or PP (polypropylenes).

5. Method according to claim 4, **characterised in that** the plastic film is suitable for food and/or drinking water.

6. Method according to claim 4 or 5, **characterized in that** a film of OPP (oriented polypropylene) is selected.

7. Method according to claim 4 or 5, **characterized in that** a film of PE (polyethylene) is selected.

8. Method according to anyone of the claims 1 to 7, **characterised in that** an electrotechnical process has been/is being used for the surface treatment.

9. Method according to anyone of the claims 1 to 7, **characterised in that** a plasma or corona treatment has been/is being used for the surface treatment.

10. Method according to anyone of the preceding claims, **characterized in that** additional surface treatment is optionally carried out by applying an adhesion promoter.

11. Method according to claim 10, **characterized in that** the adhesion promoter is selected on the basis of chlorinated polyolefins.

12. Method according to anyone of the preceding claims, **characterized in that** aramid fibres, boride fibres, boron carbide fibres, carbon fibres or mixtures thereof, preferably carbon fibres, are selected as reinforcement fibres.

13. Method according to claim 12, **characterized in that** the reinforcement fibres are used in the form of tapes or similar web-shaped material present.

14. Method according to anyone of the preceding claims, **characterized in that** the resin used for the formation of the fibre-composite matrix is selected from epoxy resins.

15. Method according to one of the preceding claims, **characterized in that** the material structure produced according to claims 1 to 14 is cured in an oven, then separated in the circumferential direction, the winding core is removed and the halves are joined again by adhesive bonding after overlapping of the joint edges.

## Revendications

1. Procédé de fabrication d'un réservoir destiné à recevoir, stocker et transporter des milieux visqueux ou fluides, constitué d'un revêtement intérieur et d'une enveloppe extérieure en matière plastique renforcée de fibres, dans lequel, dans une première étape, le revêtement est construit par enroulement d'un film en matière plastique sur un noyau d'enroulement proche de la forme finale ou identique à la forme finale, dans une deuxième étape, le revêtement est soumis à un traitement de surface pour augmenter le pouvoir adhésif par rapport à une autre structure de matériaux, dans une troisième étape, le revêtement ainsi prétraité est enveloppée d'un matériau constitué de fibres de renforcement imprégnées de résine, préimprégnées ou non imprégnées et, dans d'autres étapes, cette structure est soumise à un durcissement sous contrôle de température défini, à une séparation et à un réassemblage pour donner le boîtier du réservoir, dans lequel un matériau est choisi pour le noyau d'enroulement, qui présente un coefficient de dilatation thermique □ supérieur à celui des fibres de renforcement ou de la matière plastique composite à fibres, de sorte que le film en matière plastique se trouvant entre le noyau d'enroulement et la matière plastique renforcée de fibres est pressé pendant le durcissement, et qui se rétrécit lors du refroidissement tout en conservant ses propriétés matérielles d'origine, et le traitement de surface consiste à traiter au moins une surface du film en matière plastique afin de la polariser ou à la traiter ainsi pendant et/ou après l'enroulement sur le noyau d'enroulement.

2. Procédé selon la revendication 1, **caractérisé en ce que** le noyau d'enroulement est constitué d'une matière plastique appropriée ou d'un métal ou d'un alliage métallique.

3. Procédé selon la revendication 2, **caractérisé en ce que** le noyau d'enroulement a été/est formé en aluminium ou en un alliage d'aluminium.

4. Procédé selon l'une quelconque des revendications 1 à 3, **caractérisé en ce que** le film en matière plastique est choisi parmi le groupe constitué par le HD-PE (polyéthylène haute densité), le LD-PE (polyéthylène basse densité), le PA (polyamide) ou le PP (polypropylène).

5. Procédé selon la revendication 4, **caractérisé en ce que** le film en matière plastique est convenable aux produits alimentaires et/ou à l'eau potable.

6. Procédé selon la revendication 4 ou 5, **caractérisé en ce qu'**il est choisi un film de OPP (polypropylène orienté).

7. Procédé selon la revendication 4 ou 5, **caractérisé en ce qu'**il est choisi un film de PE (polyéthylène).

8. Procédé selon l'une quelconque des revendications 1 à 7, **caractérisé en ce qu'**un procédé électrotechnique a été/est utilisé pour le traitement de surface.

9. Procédé selon l'une quelconque des revendications 1 à 7, **caractérisé en ce qu'**un traitement au plasma ou par effet corona a été/est effectué pour le traitement de surface.

10. Procédé selon l'une quelconque des revendications précédentes, **caractérisé en ce que**, optionnellement, un traitement de surface supplémentaire est effectué par l'application d'un agent adhésif.

11. Procédé selon la revendication 10, **caractérisé en ce que** comme agent adhésif est choisi un adhésif à base de polyoléfines chlorées.

12. Procédé selon l'une quelconque des revendications précédentes, **caractérisé en ce que** comme fibres de renforcement sont choisies des fibres d'aramide, de borure, de carbure de bore, de carbone ou des mélanges de ces fibres, de préférence des fibres de carbone.

13. Procédé selon la revendication 12, **caractérisé en ce que** les fibres de renforcement sont utilisées sous forme de bandes ou de matériaux similaires en forme de bande.

14. Procédé selon l'une quelconque des revendications précédentes, **caractérisée en ce que** la résine utilisée pour former la matrice du composite de fibres est choisie parmi les résines époxy.

15. Procédé selon l'une des revendications précédentes, **caractérisé en ce que** la structure de matériaux réalisée selon les revendications 1 à 14 est durcie dans un four, puis elle est séparée dans la direction circonférentielle, le noyau d'enroulement est retiré et les moitiés sont réassemblées par collage après la découpe en biseau des bords à assembler.
